# EUROPEAN PATENT SPECIFICATION

(11) **EP 1 408 425 B1**
(45) Date of publication and mention of the grant of the patent: **16.08.2006**
(21) Application number: 03253737.5
(22) Date of filing: 13.06.2003
(51) Int. Cl.: G06F 17/30

(54) **Hard copy web client**
Web Drucker
Imprimante web

(30) Priority: 07.10.2002 KR 2002060964
(43) Date of publication of application: 14.04.2004
(73) Proprietor: SAMSUNG ELECTRONICS CO., LTD., Suwon-si, Gyeonggi-do 442-742 (KR)
(72) Inventor: Kim, Dae-hyun, Seocho-gu, Seoul (KR)
(74) Representative: Geary, Stuart Lloyd

(56) References cited:
- EP-A- 0 851 367
- EP-A- 0 964 339
- EP-A- 0 977 130
- EP-A- 1 109 113
- EP-A- 1 204 043
- WO-A-02/41192
- US-A1- 2002 069 260
- US-B1- 6 314 432
- PATENT ABSTRACTS OF JAPAN vol. 1999, no. 10, 31 August 1999 (1999-08-31) & JP 11 134126 A (CANON INC), 21 May 1999 (1999-05-21)

## Description

The present invention relates to a method of printing web pages comprising sending to a web server a request based on a resource locator for a hypertext document, receiving the requested document from the web server and printing the requested document and to a hard copy web client apparatus comprising communication means for sending to web servers requests based on resource locators for hypertext documents and receiving the requested documents from the web servers and printing means for printing requested hypertext documents received by the communication means.

A wide variety of information devices, including computers, PDAs and network printers are provided with web browsers. A network printer (web printer) equipped with a web browser can print a web page without the intervention of a computer is now available. The web printer comprises a web browser and a network card. The web printer obtains information, such as web pages, from web servers using its web browser via the network card, converts the obtained web pages in a form that can be printed and prints them.

For example, JP-A-11-134126 discloses a printer that can obtain data directly from a web server on a network without the intervention of another information processing apparatus, such as a computer, and can print data obtained from a web server. This can store bookmarks and enables the printer to set a printing time for web pages corresponding to the uniform resource locators (URLs) of the bookmarks. The bookmarked URLs are displayed, retrieved, and selected using an LCD panel.

The URI scheme for identifying resources is defined in RFC 2396. URLs are a subset of URIs of the form: protocol://server hostname/path to the resource (optionally a query).

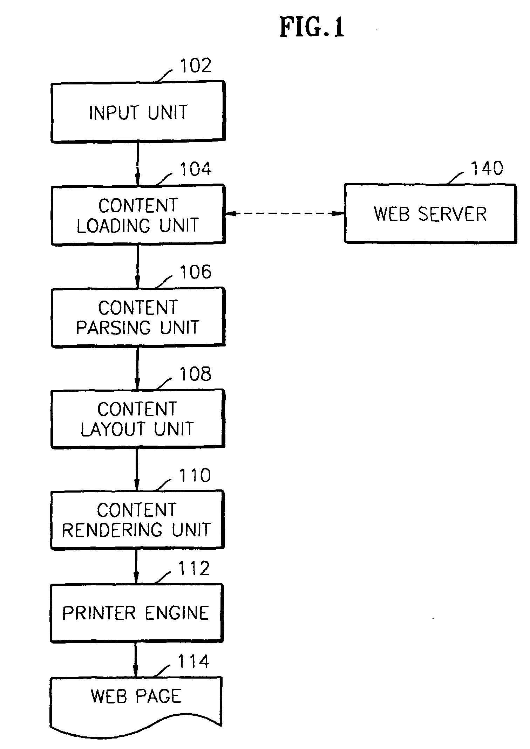

Figure 1 is a functional block diagram of a conventional web printer for printing web page information. The apparatus shown in Figure 1 comprises a URL input unit 102, a content loading unit 104, a content parsing unit 106, a content layout unit 108, a content rendering unit 110 and a printer engine 112.

The URL input unit 102 receives the URL of a web page, desired to be printed by a user. The content loading unit 104 request the desired web page from a web server 140 through a network card (not shown) and provides the obtained web page information to the content parsing unit 106. The content loading unit 104 is in effect a form of a web browser.

The content parsing unit 106 parses content data in a web page to be output. The content data to be output is, for example, text and/or graphics. The content layout unit 108 lays out information items (text and graphics) provided by the content parsing unit 106 to configure the image to be printed and provides the layout information to the content rendering unit 110.

The content rendering unit 110, which refers to the layout information generated in the content layout unit 108, renders the image to be printed and converts the image into print commands that can be processed by the printer engine 112. The printer engine 112 prints the image onto printing paper 114 according to the print commands provided by the content rendering unit 110.

In the conventional web printer shown in Figure 1, the URL of a web page, desired to be printed, is input through the URL input unit 102, web page information is obtained by the content loading unit 104 and, thus, obtained web page information can be printed on paper 114 by means the content parsing unit 106, the content layout unit 108, the content rendering unit 110 and the printer engine 112.

However, on the printed web page, the URLs of a hyperlinked content cannot be determined. This is because when the web page is printed, the only indication of a linked content is, typically, underlining of the link. However, even this clue may be absent. The URL of the linked content is not revealed on the printed web page or accessible by the web printer, for example, by being registered as a bookmark and displayed by the URL input unit 102 for print selection. Accordingly, with the prior art web printer, the hyperlinked content cannot be readily checked (accessed via the web printer) without manually determining the URL of the hyperlink and/or inputting the URL of the hyperlink via the URL input unit 102 to print the hyperlinked web page.

Accordingly, since a conventional web printer can access only bookmarked URLs or those input via an input unit, a user cannot efficiently access a content linked to from a printed web page. For example, even if after printing a web page a user wants to print a web page hyperlinked to the printed web page, because the URL of the hyperlinked web page cannot be obtained from the printed web page, the user cannot print the linked web page.

A method according to the present invention is characterised by storing positional information, relating to the physical position, in the printed document, at which a link marker is printed, together with the resource locator associated with the link marker, receiving a position signal from, preferably, a digitiser tablet means and determining whether there is a match between the positions identified by the position signal and said positional information and, in the event of a match, printing the resource identified by said resource locator.

An apparatus according to the present invention is characterised by storage means for storing positional information, relating to the physical position, in the printed document, at which a link marker is printed, together with the resource locator associated with the link marker, position input means, preferably a digitiser tablet means on which a document printed by the printing means can be laid as a reference, for a user to select a link and means for determining whether there is a match between a position identified by a position signal output by the position input means and link marker positional information, stored in the storage means, and, in the event of a match, causing the printing means to print the resource identified by the resource locator associated with the matched positional information. in the event of a match, causing the printing means to print the resource identified by the resource locator associated with the matched positional information.

Preferably, said resource is requested from a web server before the generation of said position signal.

Preferably, a match is determined when the position identified by said position signal falls within an area defined by said positional information.

Preferably, the identity of said resource is displayed and printing of said resource is performed in the event that a user confirmation signal is received in response to the display of the identity of said resource.

Additional preferred and optional features are set forth in claims 5, 6, 7 and 13 to 18 appended hereto.

According to the present invention, there is also provided a computer readable storage medium for controlling a printer as defined in claim 19.

An embodiment of the present invention will now be described, by way of example, with reference to Figures 2 to 6 of the accompanying drawings, in which:
Figure 1 is a functional block diagram of a conventional web printer printing for web page information;
Figure 2 is a functional block diagram of a web printer according to the present invention;
Figure 3 show a sheet of printed paper;
Figure 4 shows a sheet of paper bearing location information on the printer of Figure 2;
Figure 5 shows the appearance of the URL selection unit of the printer of Figure 2; and
Figure 6 is a flowchart of a process of printing web page information using the printer shown in Figure 2.

Since the general structure of a printer is well-known to those skilled in the art, instead of explaining the entire structure of a printer, the present invention will now be explained focusing on the elements for obtaining and processing web page information.

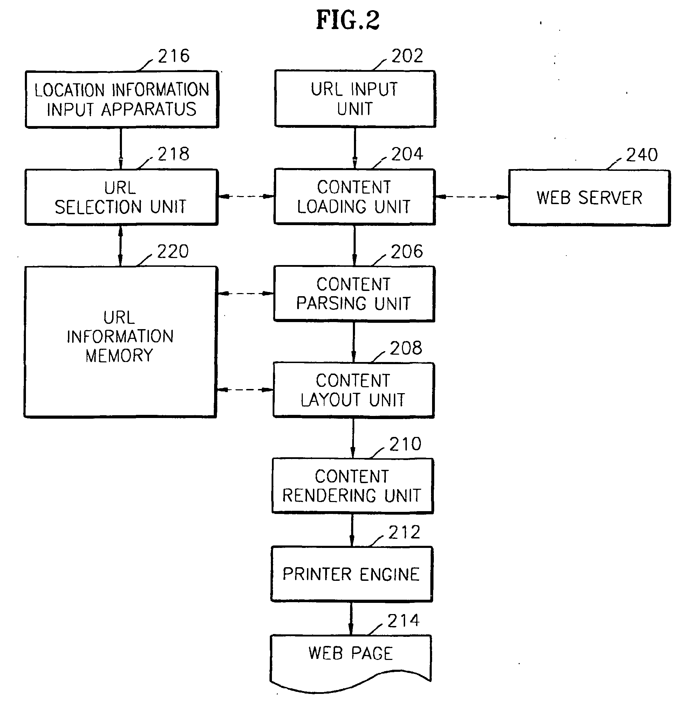

Referring to Figure 2, a web printer comprises a URL input unit 202, a content loading unit 204, a content parsing unit 206, a content layout unit 208, a content rendering unit 210, a printer engine 212, a location information input apparatus 216, a URL selection unit 218 and a URL information memory 220.

The URL input unit 202 receives the URL of a web page, desired to be printed by a user. The content loading unit 204 requests desired web pages from web servers 240 through a network card (not shown) to obtain the web page information therefore and provides the obtained web page information to the content parsing unit 206. The content loading unit 204 is in effect a web browser.

The content parsing unit 206 parses the content data to be output, from the obtained web page information. The content data to be output is, for example text and/or graphics. If there are URL information items in the obtained web page information (i.e. links to other resources in the obtained web page information), that is anchor tags, such linked URL information is provided to the content layout unit 208, the content loading unit 204 and the URL memory 220. The content loading unit 204 obtains web page information corresponding to the linked resource URLs, provided by the content parsing unit 206, and stores the linked web page information, thereby storing in advance hyperlinked web page information.

The content layout unit 208 lays out the information items provided by the content parsing unit 206, that is the text and graphics, on the locations where, and in the way by which, the items are to be printed out on a sheet of printing paper, and provides the layout information to the content rendering unit 210. For example, the content layout unit 208 can lay out the locations for letters on a printing paper, referring to markup language tags for setting paragraphs, including <P>(Paragraph), <BR>(BReak), <PRE>(PREformatted text), <HR>(Horizontal Rule), <LIST>, and <BLOCKQUOTE>. Also, the content layout unit 208 can set the size of letters to be printed, referring to tags for setting the size of letters, including <Hn>(Heading), <BASEFONE SIZE = n>, and <FONT>. In addition, the content layout unit 208 can set the locations on the printed page and the sizes of images, referring to a tag <IMG SRC = "....">.

Using as an example hypertext URL letters in a URL anchor, the content parsing unit 206 obtains the URL information referring to a markup language tag, <A HREF= "*url*">*text*</A>. Here, in the part "*url*" the url of the linked resource and the part *text* is the text to be display and to which the link is anchored. Typically, when an HTML document is viewed or printed using a web browser and the content layout unit 208, only the anchor text, typically underlined, is presented to the reader. The anchor text is often displayed in a characteristic colour.

Referring to the URL information provided by the content parsing unit 206, the content layout unit 208 provides coordinates (hereinafter referred to as "URL region information" or "URL anchor print region information") allocating a region where the hypertext URL letters are to be printed, to the URL information memory 220. Since the content layout unit 208 allocates a location where the hypertext URL letters (usually, referred to as a URL anchor) corresponding to a URL are laid out when displayed, the coordinates of a region where the hypertext URL letters are to be printed can be provided to the URL information memory 220. The URL region information may simply be the coordinates of the vertices of a rectangular box, and may also be coordinates representing more complicated figures so as to correspond to graphically expressed hypertext URL letters.

Therefore, the URL information memory 220 stores the URL information from the content parsing unit 206 and the URL region information indicating the region in which the hypertext URL letters corresponding to the linked URLs are printed on a printing paper, from the content layout unit 208.

The content rendering unit 210 converts the parsed information items into image information, with reference to the layout information generated in the content layout unit 208, and generates print commands that can control the printer engine 212. The printer engine 212 prints the web page onto a sheet of printing paper 214 according to the print commands provided by the content rendering unit 210.

The sheet of paper 214, on which the obtained web page information is printed, is placed on a location information input apparatus 216. The location information input apparatus 216 is mapped to correspond to the printing paper 214. That is, if the user selects a location on the printing paper 214 on the location information input apparatus 216, location information indicating the selected location is output from the location information input apparatus 216. The location information output from the location information input apparatus 216 is provided to the URL selection unit 218.

The location information input apparatus 216 has a flat panel-type digitizer on which a sheet of paper can be placed. A digitizer is an apparatus outputting location information corresponding to an indicated location, for example, coordinate information, and the types of digitizers include a finger touch type, a stylus type, a touch panel type, etc. Typically the location information input apparatus 216 is of the finger touch type and when a web page is printed on a sheet of paper, the user touches a hyperlinked URL anchor, printed on the sheet of paper, to select the printed hyperlinked URL on the paper by causing generation of location information, via the location information input apparatus 216, corresponding to the printed URL anchor. In particular, the location information generated by the apparatus 216 is compared with the previously stored URL anchor print region information to determine which printed hyperlinked URL anchor the user has selected on the printed web page.

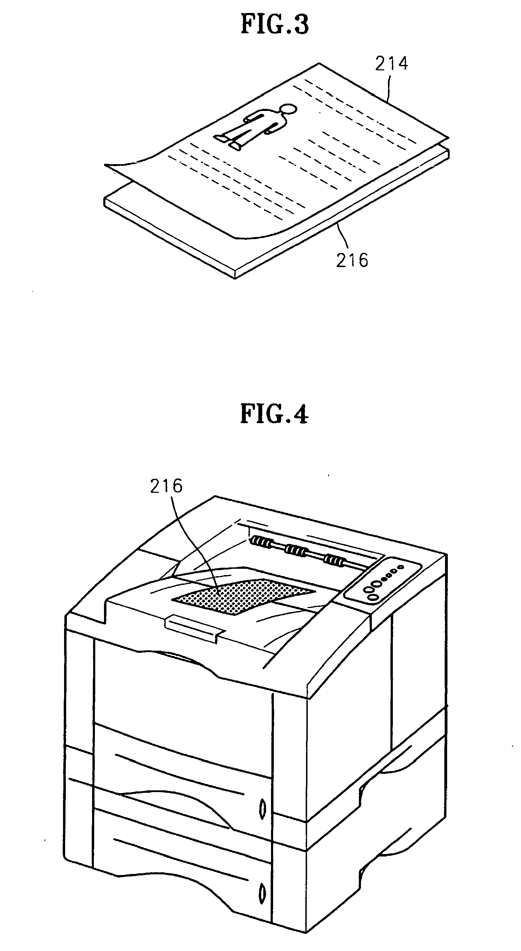

Referring to Figure 3, web page information, including, hyperlinks, for example, hypertext URL letters, is printed on a sheet of printing paper 214. The hypertext URL letters are usually underlined. If the user selects one of the hypertext URLs on the sheet of paper 214, the location information input apparatus 216 detects the user's selection and outputs corresponding location information. The location information input apparatus 216 is installed conveniently near where printed sheets of paper of output from the web page printer.

Referring to Figure 4, the location information input apparatus 216 is installed at the paper output, although is may be in other places in other embodiments.

Referring again to Figure 2, the URL selection unit 218 compares location information corresponding to a user-selected location on the sheet of paper 214 (for example, a user-selected printed hypertext URL), provided by the location information input apparatus 216, with the URL region information stored in the URL information memory 220, and selects an linked URL corresponding to a matching URL region information. The selected linked URL is provided to the content loading unit 204. Since, typically, the content loading unit 204 retrieves and stores web pages linked to the printed web page in advance, the content loading unit 204 can immediately provide web page information corresponding to the selected extracted linked URL (i.e., linked web page information) provided by the URL selection unit 218. Although the content loading unit 204 does not necessarily need to obtain and store web page information linked to the printed web page in advance, the time for printing the other linked web page information is much shortened thereby.

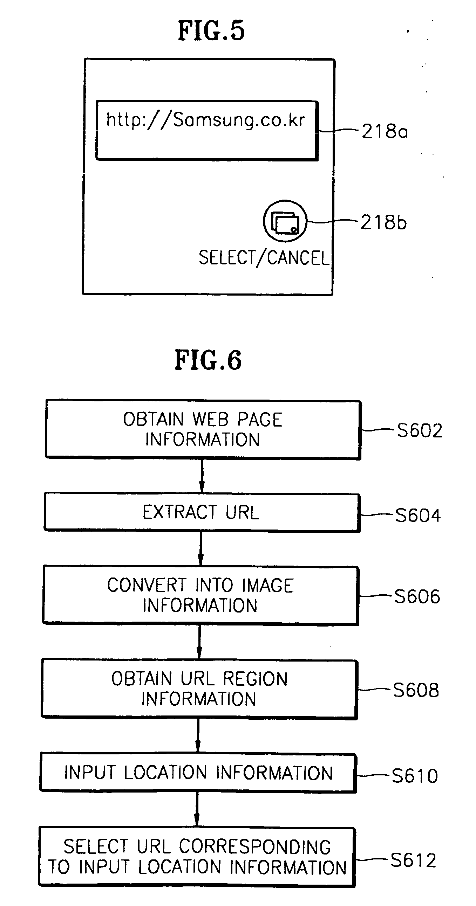

Referring to Figure 5, the URL selection unit 218 comprises a display unit 218a and a selection button 218b. When the user selects a location on a printed sheet of paper 214, placed on the location information input apparatus 216, for example if the user presses at a location using a finger or a pointing device, location information, corresponding to the pressed location, is generated by the location information input apparatus 216. This location information is provided to the URL selection unit 218, and the URL selection unit 218 accesses the URL information memory 220 and searches for URL region information corresponding to the input location information from the location information input apparatus 216.

If there is URL region information corresponding to the input location information, the URL information corresponding to the URL region information, for example the URL (shown in Figure 5) or hypertext URL letters (e.g. "Samsung" in an underlined coloured font, not shown in Figure 5), are displayed on the display unit 218a. The user checks that the selected location is correct, referring to the displayed hypertext URL letters, and then pushes the selection button 218b.
Pushing the selection button 218b causes the URL, corresponding to the selected hypertext URL letters, to be provided to the content loading unit 204, which can, for example immediately provide the web page information corresponding to the selected linked URL to the content parsing unit 206 for processing.

Turning now to the operation of the system and referring to Figures 2 and 6, web page information corresponding to a URL, input by a user is obtained (operation S602). More particularly, the content loading unit 204 accesses a web server 240, obtains web page information, corresponding to the URL input from the URL input unit 202, and provides the obtained web page information to the content parsing unit 206.

Other linked URL information is extracted from the web page information obtained through the network (operation S604). More particularly, the content parsing unit 206 parses content data to be output from the obtained web page information, and provides parsed and extracted linked URL information (i.e., a URL and/or a hypertext URL), if any, to the URL memory 220.

The web page information is converted into image information that can be printed and the image is printed (operation S606). More particularly, the content layout unit 208 lays out information items provided by the content parsing unit 206, that is, the text and graphics, at locations where, and in a way by which, the items are to be printed on a printing paper 214, and provides the layout information to the content rendering unit 210. Referring to the layout information generated by the content layout unit 208, the content rendering unit 210 converts the parsed information items from the content parsing unit 206 into image information and generates print commands that can control the printer engine 212. The printer engine 212 prints on the printing paper 214 according to the print commands provided by the content rendering unit 210. By the print operation of the printer engine 212, the obtained web page information is printed on the printing paper 214. region information is obtained from the converted image information for a region where the extracted linked URL information is to be placed on the printed sheet of paper 214 (i.e., a URL anchor print region is obtained) (operation S608). More particulaly, referring to the extracted linked URL information provided by the content parsing unit 206, the content layout unit 208 provides the region information corresponding to the extracted linked URL information (i.e., URL anchor print region information) to the URL information memory 220.

Location information corresponding to the printed image information is input through a location input unit (operation S610). More particularly, if, for example, at operation 610, the user selects one of the linked hypertext URLs printed on the printing paper 214, the location information input apparatus 216 recognizes the user-selected location on the print paper 214 (i.e. recognizes a user-selected printed hypertext URL) and outputs URL location information.

A URL corresponding to the input URL location information is selected by comparing the input URL location information with the stored URL region information (operation S612). More particularly, the URL selection unit 218 compares the URL location information, provided by the location information input apparatus 216, with the URL region information of the extracted linked URL information, stored in the URL information memory 220, and selects a corresponding extracted linked URL in the event of a match. The selected extracted linked URL is provided to the content loading unit 204. The selected extracted linked URL is provided to the web browser (i.e., the content loading unit 204) so that web page information corresponding to the selected extracted linked URL can be obtained.

The content loading unit 204 and the content parsing unit 206 obtain web page information corresponding to a URL input by the URL input unit 202 as well as other linked (hyperlinked) URLs in each obtained web page information. Thus, obtained web page information, including hyperlinked web page information, is printed on the printing paper 214 through the content parsing unit 206, the content layout unit 208, the content rendering unit 210, and the printer engine 212. According to the Internet/web page printer of the present invention described above, other web pages hyperlinked to a web page can be easily printed.

The described web page printer prints web page information linked from a printed web page according to input location information of printed URL anchors, or according to input URL anchor print regions (locations). URL information hyperlinked to the printed web page is extracted from web page information, which is obtained through a network, such as the Internet, via a web browser and converted into image information to be printed. From the converted image information, a URL anchor print region location, such as hypertext URL print region information, is obtained/stored indicating a region in which a URL anchor corresponding to the extracted URL information is located on the printed web page/image. Input location information from a location input unit corresponding to the printed web page/image information is compared with the stored URL anchor print region location to select the extracted hyperlinked URL (i.e., to select one of the printed URL anchors) if the input location information matches the URL anchor print region location. The selected extracted hyperlinked URL is provided to the web browser so that web page information corresponding to the selected extracted hyperlinked URL is obtained, thereby obtaining other web pages hyperlinked to the printed web page.

Advantageously, the present invention provides a method of (and an Internet/web page printer) printing web page information of a printed uniform resource locator (URL) anchor selected on a printed web page. Further, although in the described example embodiments web pages hyperlinked to one printed web page are accessible at the printer (e.g., viewed at the printer via the URL selection unit 218, printed, etc.), the present invention is not limited to such configuration, and web pages hyperlinked to all respective (successive) printed web pages can be accessible at the printer, thereby providing nested hyperlinked web page access at the printer. The processes of the invention as shown in Figure 2 and provided in an Internet/web page network printer are implemented in software and/or computing hardware. For example, the content parsing unit 206 and content layout unit 208 may be software that embody the present invention's URL extractor, and image information converter and URL region information obtainer, respectively. Accordingly, the printer of the invention comprises data storage, such as magnetic and optical discs, RAM, ROM, etc. on which the processes of the invention can be stored and executed.

## Claims

1. A method of printing web pages comprising:
sending to a web server (240) a request based on a resource locator for a hypertext document;
receiving the requested document from the web server (240); and
printing the requested document,
**characterised by**
providing a printed document on a location input unit (216);
storing positional information defining the physical position of the location of a link marker in the printed document, together with the resource locator associated with the link marker;
receiving a position signal from the location input unit (216) corresponding to a user selected link marker in the printed document; and
determining whether there is a match between the positions identified by the position signal and said positional information and, in the event of a match, printing the resource identified by said resource locator.

2. A method according to claim 1, wherein said resource is requested from a web server (240) before the generation of said position signal.

3. A method according to claim 1 or 2, wherein a match is determined when the position identified by said position signal falls within an area defined by said positional information.

4. A method according to claim 1, 2 or 3, including displaying the identity of said resource and printing said resource in the event that a user confirmation signal is received in response to the display of the identity of said resource.

5. A method according to claim 1, performed using a network printer which has a web browser and a network interface unit, and obtains web page information corresponding to an input uniform resource locator (URL) through the web browser and the network interface unit, converts the obtained web page information into image information for printing, wherein:
said storing positional information comprises extracting a URL from an anchor tag, converting the web page information into image information and retrieving from said image information URL anchor print region information indicating a region in which a URL anchor is located in said printed document;
said receiving a position signal comprises receiving location information corresponding to the printed document via a location input unit; and
said determining whether there is match comprises comparing the input location information with the URL anchor print region information to select the extracted URL, if the input location information matches the URL anchor print region information, and providing the selected extracted URL to the web browser to retrieve corresponding web page information.

6. A method according to claim 5, wherein input of the location information comprises:
placing on the location input unit a sheet of paper on which the document is printed; and
selecting a location on the printed sheet.

7. A method according to claim 5, wherein the selection of the extracted URL comprises:
displaying URL information of the extracted URL if the URL anchor printer region matches the input location information, through a display device; and
receiving an input selecting the displayed URL.

8. A hard copy web client apparatus comprising:
communication means (204) for sending to web servers (240) requests based on resource locators for hypertext documents and receiving the requested documents from the web servers (240); and
printing means (212) for printing requested hypertext documents received by the communication means (204),
**characterised by**
a location input unit (216) for accepting a printed document and for generating a position signal corresponding to a user selected link marker in the printed document;
storage means (220) for storing positional information defining the physical position of the location of a link marker in the printed document, together with the resource locator associated with the link marker;
means (218) for determining whether there is a match between the position identified by the position signal output by the location input unit (216) and link marker positional information, stored in the storage means (220), and, in the event of a match, causing the printing means (212) to print the resource identified by the resource locator associated with the matched positional information.

9. An apparatus according to claim 8, including control means configured to cause the communication means (204) to request resources linked to in a previously requested document without a user instruction therefore.

10. An apparatus according to claim 8 or 9, wherein means (218) for determining whether there is a match is configured to determine that there is a match when the position identified by said position signal falls within an area defined by said positional information.

11. An apparatus according to claim 8, 9 or 10, including control means, a display (218a) and user input means (218b), wherein the control means is configured for displaying the identity of said resource and causing printing of said resource in the event that a user confirmation signal is received from the user input means (218b) in response to the display of the identity of said resource.

12. An apparatus according to claim 8, constituted by a network printer which has a network interface unit for accessing the Internet and a web browser for obtaining, through the network interface unit, web page information corresponding to an input uniform resource locator (URL), the network printer comprising:
an image information converter for converting web page information, obtained through the web browser, into image information and printing the image information as a printed web page;
a URL extractor for extracting a URL in the printed web page from the obtained web page information;
a URL region information obtaining unit for retrieving, from the image information, URL anchor print region information indicating a region in which a URL anchor corresponding to the extracted URL is located in the printed image information.

13. An apparatus according to claim 12, wherein the position input means (216) is a flat panel-type digitizer for receiving thereon a printed web page and the location information is input via the flat panel-type digitizer by selecting a location on the printed web page.

14. An apparatus according to claim 13, wherein the position input means (216) is installed at a paper output tray.

15. An apparatus according to claim 12, further comprising:
a display device for displaying URL information of the extracted URL if the URL anchor print region matches a position identified by a position signal output by the position input means; and
an input unit for receiving an input selecting the displayed URL.

16. An apparatus according to claim 12, wherein the position input means (216) is a flat panel-type digitizer.

17. An apparatus according to claim 16, wherein the position input means (216) is installed at a paper output tray.

18. An apparatus according to claim 12, wherein the URL extractor stores in advance hyperlinked web page information, corresponding to the extracted URL in a storage, and the selector retrieves the hyperlinked web page information, corresponding to the selected extracted URL, from the storage.

19. A computer readable storage medium for controlling a printer in accordance with a process of:
sending to a web server (240) a request based on a resource locator for a hypertext document; and
retrieving web page information corresponding to an input uniform resource locator (URL) from the web server (240) through a network;
**characterised by**
converting the retrieved web page information into image information and printing the image information;
retrieving from the converted image information URL anchor print region information defining the location in which a URL anchor is located on the printed image information;
receiving input location information corresponding to the printed URL anchor on the printed image information via a location input unit;
comparing the input location information with the URL anchor print region information to select the extracted hyperlinked URL if the input location information matches the URL anchor print region information; and printing web page information corresponding to the selected extracted URL;

## Patentansprüche

1. Verfahren zum Drucken von Webseiten, umfassend:
Senden einer Anforderung für ein Hypertext-Dokument auf Basis eines Ressourcen-Ortsangebers an einen Web-Server (240);
Empfangen des angeforderten Dokuments von dem Web-Server (240); und
Drucken des angeforderten Dokuments,
**gekennzeichnet durch**
Bereitstellen eines gedruckten Dokuments auf einer Ortseingabeeinheit (216);
Speichern von Positionsinformationen, die die physische Position des Ortes einer Verbindungsmarkierung in dem gedruckten Dokument definieren, zusammen mit dem Ressourcen-Ortsangeber, der mit der Verbindungsmarkierung assoziiert ist;
Empfangen eines Positionssignals von der Ortseingabeeinheit (216) entsprechend einer benutzergewählten Verbindungsmarkierung in dem gedruckten Dokument; und
Bestimmen, ob eine Übereinstimmung zwischen den Positionen, die **durch** das Positionssignal identifiziert werden, und den Positionsinformationen besteht, und bei einer Übereinstimmung Drucken der Ressource, die von dem Ressourcen-Ortsangeber identifiziert wird.

2. Verfahren nach Anspruch 1, wobei die Ressource vor der Erzeugung des Positionssignals von einem Web-Server (240) angefordert wird.

3. Verfahren nach Anspruch 1 oder 2, wobei eine Übereinstimmung bestimmt wird, wenn die von dem Positionssignal identifizierte Position in einen von den Positionsinformationen definierten Bereich fällt.

4. Verfahren nach Anspruch 1, 2 oder 3, umfassend Anzeigen der Identität der Ressource und Drucken der Ressource, wenn ein Benutzerbestätigungssignal in Reaktion auf die Anzeige der Identität der Ressource empfangen wird.

5. Verfahren nach Anspruch 1, das unter Verwendung eines Netzdruckers, der einen Web-Browser und eine Netzschnittstelleneinheit aufweist, durchgeführt wird und über den Web-Browser und die Netzschnittstelleneinheit Webseiteninformationen entsprechend einem eingegebenen einheitlichen Ressourcen-Ortsangeber (URL) erhält, die erhaltenen Webseiteninformationen in Bildinformationen zum Drucken umwandelt, wobei:
das Speichern von Positionsinformationen Extrahieren eines URL aus einem Anker-Tag (anchor tag), Umwandeln der Webseiteninformationen in Bildinformationen und Abrufen von URL-Anker-Druckregionsinformationen, die eine Region, in der sich ein URL-Anker in dem gedruckten Dokument befindet, anzeigen, aus den Bildinformationen umfasst;
das Empfangen eines Positionssignals Empfangen von Ortsinformationen entsprechend dem gedruckten Dokument über eine Ortseingabeeinheit umfasst; und
das Bestimmen, ob eine Übereinstimmung besteht, Vergleichen der eingegebenen Ortsinformationen mit den URL-Anker-Druckregionsinformationen zum Auswählen des extrahierten URL bei Übereinstimmung der eingegebenen Ortsinformationen mit den URL-Anker-Druckregionsinformationen und Bereitstellen des ausgewählten extrahierten URL für den Web-Browser zum Abrufen entsprechender Webseiteninformationen umfasst.

6. Verfahren nach Anspruch 5, wobei das Eingeben der Ortsinformationen Folgendes umfasst:
Platzieren eines Blatt Papiers, auf dem das Dokument gedruckt ist, auf der Ortseingabeeinheit; und
Auswählen eines Ortes auf dem gedruckten Blatt.

7. Verfahren nach Anspruch 5, wobei das Auswählen des extrahierten URL Folgendes umfasst:
Anzeigen von URL-Informationen des extrahierten URL bei Übereinstimmung der URL-Anker-Region mit den eingegebenen Ortsinformationen über eine Anzeigevorrichtung; und
Empfangen einer Eingabe zum Auswählen des angezeigten URL.

8. Ausdruck-Web-Client-Vorrichtung, umfassend:
eine Kommunikationseinrichtung (204) zum Senden von Anforderungen für Hypertext-Dokumente auf Basis von Ressourcen-Ortsangebem an Web-Server (240) und Empfangen der angeforderten Dokumente von den Web-Servern (240); und
eine Druckeinrichtung (212) zum Drucken angeforderter Hypertext-Dokumente, die von der Kommunikationseinrichtung (204) empfangen wurden;
**gekennzeichnet durch**
eine Ortseingabeeinheit (216) zum Annehmen eines gedruckten Dokuments und zum Erzeugen eines Positionssignals entsprechend einer benutzergewählten Verbindungsmarkierung in dem gedruckten Dokument;
eine Speichereinrichtung (220) zum Speichern von Positionsinformationen, die die physische Position des Ortes einer Verbindungsmarkierung in dem gedruckten Dokument definieren, zusammen mit dem Ressourcen-Ortsangeber, der mit der Verbindungsmarkierung assoziiert ist;
eine Einrichtung (218) zum Bestimmen, ob eine Übereinstimmung zwischen der Position, die **durch** das von der Ortseingabeeinheit (216) ausgegebene Positionssignal identifiziert wird, und Verbindungsmarkierungspositionsinformationen, die in der Speichereinrichtung (220) gespeichert sind, besteht, und bei einer Übereinstimmung Veranlassen der Druckeinrichtung (212) zum Drucken der Ressource, die von dem Ressourcen-Ortsangeber, der mit den auf Übereinstimmung geprüften Positionsinformationen assoziiert ist, identifiziert wird.

9. Vorrichtung nach Anspruch 8, die eine Steuereinrichtung umfasst, die dazu konfiguriert ist, die Kommunikationseinrichtung (204) zu veranlassen, Ressourcen, zu denen in einem zuvor angeforderten Dokument eine Verbindung bestand, ohne eine Benutzeranweisung dafür anzufordern.

10. Vorrichtung nach Anspruch 8 oder 9, wobei die Einrichtung (218) zum Bestimmen, ob eine Übereinstimmung besteht, dazu konfiguriert ist, zu bestimmen, dass eine Übereinstimmung besteht, wenn die von dem Positionssignal identifizierte Position in einen von den Positionsinformationen definierten Bereich fällt.

11. Vorrichtung nach Anspruch 8, 9 oder 10, die eine Steuereinrichtung, eine Anzeige (218a) und eine Benutzereingabeeinrichtung (218b) umfasst, wobei die Steuereinrichtung dazu konfiguriert ist, die Identität der Ressource anzuzeigen und Drucken der Ressource zu veranlassen, wenn ein Benutzerbestätigungssignal von der Benutzereingabeeinrichtung (218b) in Reaktion auf die Anzeige der Identität der Ressource empfangen wird.

12. Vorrichtung nach Anspruch 8, bestehend aus einem Netzdrucker, der eine Netzschnittstelleneinheit zum Zugang zum Internet und einen Web-Browser aufweist, um durch die Netzschnittstelleneinheit Webseiteninformationen entsprechend einem eingegebenen einheitlichen Ressourcen-Ortsangeber (URL) zu erhalten, wobei der Netzdrucker Folgendes umfasst:
einen Bildinformationswandler zum Umwandeln von Webseiteninformationen, die durch den Web-Browser erhalten wurden, in Bildinformationen und Drucken der Bildinformationen als eine gedruckte Webseite;
einen URL-Extrahierer zum Extrahieren eines URL in der gedruckten Webseite aus den erhaltenen Webseiteninformationen;
eine URL-Regionsinformationserhaltungseinheit, um aus den Bildinformationen URL-Anker-Druckregionsinfomationen abzurufen, die eine Region anzeigen, in der sich ein URL-Anker entsprechend dem extrahierten URL in den gedruckten Bildinformationen befindet.

13. Vorrichtung nach Anspruch 12, wobei die Positionseingabeeinrichtung (216) ein Flachschirm-Digitalisierer ist, um darauf eine gedruckte Webseite zu empfangen, und die Ortsinformationen über den Flachschirm-Digitalisierer durch Auswählen eines Ortes auf der gedruckten Webseite eingegeben werden.

14. Vorrichtung nach Anspruch 13, wobei die Positionseingabeeinrichtung (216) an einem Papierausgabefach installiert ist.

15. Vorrichtung nach Anspruch 12, des Weiteren umfassend:
eine Anzeigevorrichtung zum Anzeigen von URL-Informationen des extrahierten URL, wenn die URL-Anker-Druckregion mit einer Position, die durch ein von der Positionseingabeeinrichtung ausgegebenes Positionssignal identifiziert wird, übereinstimmt; und
eine Eingabeeinheit zum Empfangen einer Eingabe zum Auswählen des angezeigten URL.

16. Vorrichtung nach Anspruch 12, wobei die Positionseingabeeinrichtung (216) ein Flachschirm-Digitallsierer ist.

17. Vorrichtung nach Anspruch 16, wobei die Positionseingabeeinrichtung (216) an einem Papierausgabefach installiert ist.

18. Vorrichtung nach Anspruch 12, wobei der URL-Extrahierer vorab hyperverlinkte Webseiteninformationen entsprechend dem extrahierten URL in einem Speicher speichert und der Selektor die hyperverlinkten Webseiteninformationen entsprechend dem extrahierten URL aus dem Speicher abruft.

19. Rechnerlesbares Speichermedium zum Steuern eines Druckers nach einem Prozess aus:
Senden einer Anforderung für ein Hypertext-Dokument auf Basis eines Ressourcen-Ortsangebers an einen Web-Server (240); und
Abrufen von Webseiteninformationen entsprechend einem eingegebenen einheitlichen Ressourcen-Ortsangebers (URL) von dem Web-Server (240) über ein Netz;
**gekennzeichnet durch**
Umwandeln der abgerufenen Webseiteninformationen in Bildinformationen und Drucken der Bildinformationen;
Abrufen von URL-Anker Druckregionsinformationen, die den Ort, an dem sich ein URL-Anker auf den gedruckten Bildinformationen befindet, definieren, aus den umgewandelten Bildinformationen;
Empfangen von eingegebenen Ortsinformationen entsprechend dem gedruckten URL-Anker auf den gedruckten Bildinformationen über eine Ortseingabeeinheit;
Vergleichen der eingegebenen Ortsinformationen mit den URL-Anker-Druckregionsinformationen, um den extrahierten hyperverlinkten URL auszuwählen, wenn die eingegebenen Ortsinformationen mit den URL-Anker Druckregionsinformationen übereinstimmen; und
Drucken von Webseiteninformationen entsprechend dem ausgewählten URL;

## Revendications

1. Procédé d'impression de pages Web comprenant les étapes consistant à :
envoyer vers un serveur Web (240) une demande basée sur un repère de ressource pour un document hypertexte ;
recevoir le document demandé en provenance du serveur Web (240) ; et
imprimer le document demandé,
**caractérisé par** les étapes consistant à :
placer un document imprimé sur une unité d'entrée d'emplacement (216);
stocker des informations de position définissant la position physique de l'emplacement d'un marqueur de lien dans le document imprimé, en même temps que le repère de ressource associé au marqueur de lien ;
recevoir un signal de position en provenance de l'unité d'entrée d'emplacement (216) correspondant à un marqueur de lien sélectionné par un utilisateur dans le document imprimé ; et
déterminer s'il existe, ou non, une concordance entre les positions identifiées par le signal de position et lesdites informations de position et, dans le cas où il existe une concordance, imprimer la ressource identifiée par ledit repère de ressource.

2. Procédé selon la revendication 1, dans lequel ladite ressource est demandée à partir d'un serveur Web (240) avant la génération dudit signal de position.

3. Procédé selon la revendication 1 ou 2, dans lequel une concordance est déterminée quand la position identifiée par ledit signal de position se situe à l'intérieur d'une zone définie par lesdites informations de position.

4. Procédé selon la revendication 1, 2 ou 3, comprenant les étapes consistant à afficher l'identité de ladite ressource et à imprimer ladite ressource dans le cas où un signal de confirmation d'un utilisateur est reçu en réponse à l'affichage de l'identité de ladite ressource.

5. Procédé selon la revendication 1, mis en oeuvre en utilisant une imprimante réseau qui comprend un navigateur Web et une unité d'interface réseau, et obtient des informations de page Web correspondant à un repère uniforme de ressource (URL) entré par le biais du navigateur Web et de l'unité d'interface réseau, et convertit les informations de page Web obtenues en des informations d'image pour l'impression, dans lequel :
ledit stockage d'informations de position comprend les étapes consistant à extraire une URL à partir d'une balise d'ancre, à convertir les informations de page Web en informations d'image, et à récupérer à partir desdites informations d'image des informations de région d'impression d'ancre d'URL indiquant une région à l'intérieur de laquelle une ancre d'URL est localisée dans ledit document imprimé ;
ladite réception d'un signal de position comprend l'étape consistant à recevoir des informations d'emplacement correspondant au document imprimé par le biais d'une unité d'entrée d'emplacement ; et
ladite détermination de l'existence éventuelle d'une concordance comprend les étapes consistant à comparer les informations d'emplacement entrées aux informations de région d'impression d'ancre d'URL de façon à sélectionner l'URL extraite, si les informations d'emplacement entrées concordent avec les informations de région d'impression d'ancre d'URL, et à envoyer l'URL extraite sélectionnée vers le navigateur Web dans le but de récupérer des informations de page Web correspondantes.

6. Procédé selon la revendication 5, dans lequel l'entrée des informations d'emplacement comprend les étapes consistant à :
placer sur l'unité d'entrée d'emplacement une feuille de papier sur laquelle le document est imprimé ; et
sélectionner un emplacement sur la feuille imprimée.

7. Procédé selon la revendication 5, dans lequel la sélection de l'URL extraite comprend les étapes consistant à :
afficher des informations d'URL de l'URL extraite si la région d'impression d'ancre d'URL concorde avec les informations d'emplacement entrées, par le biais d'un dispositif de visualisation ; et
recevoir une entrée sélectionnant l'URL affichée.

8. Dispositif de client Web d'impression papier comprenant :
des moyens de communication (204) pour envoyer vers des serveurs Web (240) des demandes basées sur des repères de ressources pour des documents hypertexte, et pour recevoir les documents demandés en provenance des serveurs Web (240) ; et
des moyens d'impression (212) pour imprimer des documents hypertexte demandés reçus par les moyens de communication (204),
**caractérisé par** :
une unité d'entrée d'emplacement (216) pour recevoir un document imprimé et pour générer un signal de position correspondant à un marqueur de lien sélectionné par un utilisateur dans le document imprimé ;
des moyens de mémoire (220) pour mémoriser des informations de position définissant la position physique de l'emplacement d'un marqueur de lien dans le document imprimé, en même temps que le repère de ressource associé au marqueur de lien;
des moyens (218) pour déterminer s'il existe, ou non, une concordance entre la position identifiée par le signal de position généré par l'unité d'entrée d'emplacement (216) et des informations de position de marqueur de lien stockées dans les moyens de stockage (220) et, dans le cas où il existe une concordance, amener les moyens d'impression (212) à imprimer la ressource identifiée par ledit repère de ressource associé audites informations de position concordantes.

9. Dispositif selon la revendication 8, comprenant des moyens de commande qui sont configurés pour amener les moyens de communication (204) à demander des ressources liées à un document précédemment demandé sans une instruction d'un utilisateur pour ce faire.

10. Dispositif selon la revendication 8 ou 9, dans lequel des moyens (218) pour déterminer s'il existe, ou non, une concordance sont configurés pour déterminer qu'une concordance existe quand la position identifiée par ledit signal de position se situe à l'intérieur d'une zone définie par lesdites informations de position.

11. Dispositif selon la revendication 8, 9 ou 10, comprenant des moyens de commande, un dispositif de visualisation (218a) et des moyens d'entrée utilisateur (218b), dans lequel les moyens de commande sont configurés pour afficher l'identité de ladite ressource et pour entraîner une impression de ladite ressource dans le cas où un signal de confirmation d'un utilisateur est reçu en provenance des moyens d'entrée utilisateur (218b) en réponse à l'affichage de l'identité de ladite ressource.

12. Dispositif selon la revendication 8, constitué par une imprimante réseau qui comprend une unité d'interface réseau pour accéder au réseau Internet et un navigateur Web pour obtenir, par le biais de l'unité d'interface réseau, des informations de page Web correspondant à un repère uniforme de ressource (URL) entré, l'imprimante réseau comprenant :
un convertisseur d'informations d'image pour convertir des informations de page Web obtenues par le biais du navigateur Web en des informations d'image, et pour imprimer les informations d'image sous la forme d'une page Web imprimée;
un extracteur d'URL pour extraire une URL dans la page Web imprimée à partir des informations de page Web obtenues ;
une unité d'obtention d'informations de région URL pour récupérer, à partir des informations d'image, des informations de région d'impression d'ancre d'URL indiquant une région à l'intérieur de laquelle une ancre d'URL correspondant à l'URL extraite est localisée dans les informations d'image imprimées.

13. Dispositif selon la revendication 12, dans lequel les moyens d'entrée de position (216) sont un numériseur de type à plat pour recevoir sur lui une page Web imprimée, et dans lequel les informations d'emplacement sont entrées par le biais du numériseur de type à plat en sélectionnant un emplacement sur la page Web imprimée.

14. Dispositif selon la revendication 13, dans lequel les moyens d'entrée de position (216) sont installés au niveau d'un bac de sortie de papier.

15. Dispositif selon la revendication 12, comprenant en outre :
un dispositif de visualisation pour afficher des informations d'URL de l'URL extraite si la région d'impression d'ancre d'URL concorde avec une position identifiée par un signal de position délivré en sortie par les moyens d'entrée de position ; et
une unité d'entrée pour recevoir une entrée sélectionnant l'URL affichée.

16. Dispositif selon la revendication 12, dans lequel les moyens d'entrée de position (216) sont un numériseur de type à plat.

17. Dispositif selon la revendication 16, dans lequel les moyens d'entrée de position (216) sont installés au niveau d'un bac de sortie de papier.

18. Dispositif selon la revendication 12, dans lequel l'extracteur d'URL enregistre au préalable des informations de page Web sous la forme d'hyperliens correspondant à l'URL extraite dans une mémoire, et le sélecteur récupère les informations de page Web sous la forme d'hyperliens correspondant à l'URL extraite sélectionnée à partir de la mémoire.

19. Support de mémorisation lisible par un ordinateur pour commander une imprimante selon une procédure comprenant les étapes consistant à :
envoyer vers un serveur Web (240) une demande basée sur un repère de ressource pour un document hypertexte ; et
récupérer des informations de page Web correspondant à un repère uniforme de ressource (URL) entré à partir du serveur Web (240) par le biais d'un réseau ;
**caractérisé par** les étapes consistant à :
convertir les informations de page Web récupérées en informations d'image, et à imprimer les informations d'image ;
récupérer, à partir des informations d'image converties, des informations de région d'impression d'ancre d'URL définissant la région à l'intérieur de laquelle une ancre d'URL est localisée dans les informations d'image imprimées ;
recevoir des informations d'emplacement entrées correspondant à l'ancre d'URL imprimée sur les informations d'image imprimées par le biais d'une unité d'entrée d'emplacement ;
comparer les informations d'emplacement entrées aux informations de région d'impression d'ancre d'URL de façon à sélectionner l'URL extraite sous la forme d'un hyperlien si les informations d'emplacement entrées concordent avec les informations de région d'impression d'ancre d'URL ; et
imprimer des informations de page Web correspondant à l'URL extraite sélectionnée.
